# DEMANDE DE BREVET EUROPEEN

(11) **EP 4 711 770 A1**
(43) Date de publication de la demande: **18.03.2026**
(21) Numéro de dépôt: 24315417.6
(22) Date de dépôt: 13.09.2024
(51) Int. Cl.: G01P 5/26, G01S 17/06, G01S 17/58, G01P 5/20, G06T 7/20

(54) **DISPOSITIF ET PROCÉDÉ POUR LA MESURE DE LA POSITION D'UN OBJET DANS UN FLUIDE EN MOUVEMENT ET PROCÉDÉ POUR LA MESURE DE LA VITESSE D'UN OBJET DANS UN FLUIDE EN MOUVEMENT**

(71) Demandeur: Naarea, 92000 Nanterre (FR)
(72) Inventeur: Thomine, Olivier, 76960 Notre-Dame de Bondeville (FR)
(74) Mandataire: Yes My Patent

(57) **Abrégé**

Dispositif (3) pour la mesure de la position d'un objet (3.1) dans un fluide en mouvement, ledit dispositif comprenant :
- un module (30, 31) d'émission de lumière ;
- une première nappe de lumière (32) et une deuxième nappe de lumière (33), lesdites première et deuxième nappe de lumière (32, 33) étant émises par le module d'émission de lumière (30, 31), chaque nappe de lumière s'étendant dans un plan de nappe et possédant une intensité lumineuse variable le long d'une direction sensiblement normale au plan de nappe, le plan de nappe de la première nappe de lumière (32) étant sensiblement parallèle au plan de nappe de la deuxième nappe de lumière (33) ;
- Un capteur de lumière (34) diffusée par l'objet (3.1) ;
- Un module de contrôle (35) connecté au module d'émission de lumière (30, 31) et au capteur de lumière (34).

## Description

L'invention appartient au domaine des dispositifs pour la mesure de la vitesse d'écoulement d'un fluide. Un aspect de l'invention concerne un dispositif pour la mesure de la position d'un objet dans un fluide en mouvement. Un autre aspect de l'invention concerne un procédé pour la mesure de la position d'un objet dans un fluide en mouvement. L'invention porte en outre sur un procédé pour la mesure de la vitesse d'un objet dans un fluide en mouvement.

### Art Antérieur

Les approches expérimentales de mesure de vitesses des écoulements sont multiples. Les méthodes les plus courantes sont de deux catégories distinctes : intrusives et non intrusives.

Une des techniques les plus utilisée est la vélocimétrie à fil chaud ou froid qui permet une mesure avec une grande précision spatiale, mais qui est ponctuelle et intrusive.

Une technique non intrusive et qui permet une mesure plus globale de la carte de vitesse d'écoulement d'un fluide est la vélocimétrie par imagerie de particules (ou PIV d'après la nomenclature anglaise « Particle Imaging Velocimetry »).

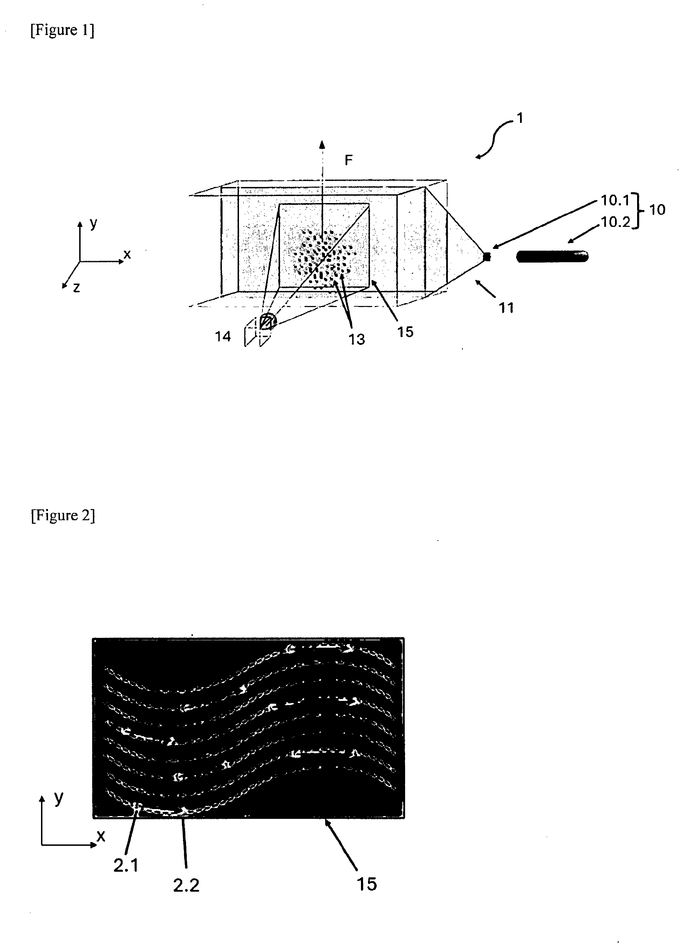

La technique PIV est illustrée à la Fig. 1, qui montre un fluide s'écoulant selon la direction indiquée par la flèche F. Le fluide est préalablement ensemencé de particules 13 ou objets réfléchissants la lumière.

Des moyens 10 permettent d'envoyer une nappe lumineuse 11 dans l'écoulement. Les moyens 10 comprennent par exemple un laser pulsé 10.2 et des éléments optiques 10.1 configurés pour créer la nappe de lumière à l'intérieur du fluide. Une caméra 14, synchronisée avec le laser 10 capture des images de la nappe de fluide grâce à la lumière réfléchie par les particules 13 comprises dans le champ de vue de la caméra 14.

La Fig. 2 montre le résultat de l'acquisition de deux images successives. La caméra peut détecter deux positions successives 2.1 et 2.2 d'une même particule réfléchissante. La flèche connectant deux positions successives sur la Fig. 2 représente le vecteur déplacement des objets dans le fluide en mouvement.

En connaissant l'intervalle de temps entre les deux images successives, il est possible de remonter au champ de vitesse instantanée de l'écoulement dans le plan de la nappe de lumière, à savoir le plan x-y dans les Figures 1 et 2.

L'inconvénient d'une telle technique est qu'elle ne permet de mesures que dans un plan, et laisse donc une grande incertitude sur la topologie de la vitesse tridimensionnelle. Il n'est donc pas possible de déterminer la topologie de la turbulence aux endroits mesurés par une technique PIV selon l'état de la technique.

Une solution pour réaliser une mesure PIV en trois dimensions comprend une dé-focalisation des particules. Il est alors possible d'analyser la lumière réfléchie par les particules dans le fluide et de remonter par des calculs à leur distance par rapport au plan focale du système d'imagerie.

Toutefois ces traitements d'images demandent une puissance de calcul très élevée. Par ailleurs, la précision dans la détermination de la position est faible car elle est d'autant plus grande que la détection d'un contour dans une image flou-tée sera bonne.

Il n'existe pas aujourd'hui de solution pour mesurer le champ de vitesse tridimensionnelle d'un fluide en mouvement de façon rapide, précise et non intrusive.

### Description de l'invention

Pour résoudre au moins partiellement les problèmes techniques évoqués en précédence, un aspect de l'invention porte sur un dispositif pour la mesure de la position d'un objet dans un fluide en mouvement, ledit dispositif comprenant :
- un module d'émission de lumière ;
- une première nappe de lumière et une deuxième nappe de lumière, lesdites première et deuxième nappe de lumière étant émises par le module d'émission de lumière, chaque nappe de lumière s'étendant dans un plan de nappe et possédant une intensité lumineuse variable le long d'une direction sensiblement normale au plan de nappe, le plan de nappe de la première nappe de lumière étant sensiblement parallèle au plan de nappe de la deuxième nappe de lumière, la première nappe de lumière possédant une première propriété électromagnétique et la deuxième nappe de lumière possédant une deuxième propriété électromagnétique ;
- Un capteur de lumière diffusée par l'objet ;
- Un module de contrôle connecté au module d'émission de lumière et au capteur de lumière.

On entend par nappe de lumière, un faisceau de lumière s'étendant dans un plan de nappe et possédant par exemple une intensité lumineuse constante dans une région du plan de nappe. L'intensité lumineuse de la nappe de lumière varie dans la direction normale au plan de nappe de façon connue.

On entend par propriété électromagnétique une caractéristique du faisceau de lumière formant la nappe de lumière. Des exemples de propriétés électromagnétique sont le spectre électromagnétique ou la polarisation de la lumière formant chaque nappe de lumière. Les deux nappes de lumière possèdent alors deux spectres électromagnétiques différents et fou deux polarisation différentes.

On entend par module d'émission de lumière des moyens configurés pour générer la première et la deuxième nappe de lumière. Le module d'émission de lumière peut comprendre une ou plusieurs sources de lumière, par exemple des lasers émettant des impulsions de lumière. Le module d'émission de lumière peut en outre comprendre des éléments optiques adaptés pour créer un faisceau lumineux en forme de nappe de lumière à partir du faisceau lumineux émis par la source de lumière. Selon un mode de réalisation le module d'émission comprend deux lasers impulsionnels, les deux faisceaux lumineux possédant deux spectres électromagnétiques différents, chaque laser étant associé à une nappe de lumière. Le premier et deuxième spectres électromagnétiques sont par exemple centrés autour de deux longueurs d'onde différentes. Selon un autre mode de réalisation, le module d'émission comprend un seul laser et des éléments optiques configurés pour créer, à partir du même faisceau laser, deux nappes de lumière possédant deux polarisations différentes. Selon un troisième mode de réalisation, un seul laser peut être utilisé pour émettre deux nappes de longueurs d'ondes différentes, par exemple avec l'utilisation d'un élément optique nonlineare tel qu'un cristal biréfringent.

On entend par capteur de lumière tout dispositif capable d'enregistrer une image grâce à la lumière diffusée par l'objet dont on veut connaître la position. Le capteur de lumière peut par exemple être une caméra CCD ou CMOS. Selon un mode de réalisation, le capteur de lumière est sensible dans une région spectrale couvrant le premier spectre électromagnétique et dans une région spectrale couvrant le deuxième spectre électromagnétique. Le capteur de lumière peut donc acquérir une première image correspondant à la lumière de la première nappe de lumière diffusée par l'objet et une deuxième image correspondant à la lumière de la deuxième nappe de lumière diffusée par l'objet. En d'autres termes, le capteur de lumière est sensible dans une région spectrale correspondant au premier spectre électromagnétique et dans une région spectrale correspondant au deuxième spectre électromagnétique. Alternativement, le capteur de lumière est sensible aux deux polarisations de la lumière des deux nappes de lumière.

On entend par module de contrôle, des moyens configurés pour déclencher un tir du module d'émission de lumière et une acquisition du capteur de lumière. Par exemple le module de contrôle comprend des moyens pour synchroniser les moyens d'émission de lumière et le capteur de lumière.

Grâce au dispositif selon un aspect de l'invention, il est donc possible d'associer deux valeurs d'intensité lumineuse à la position de l'objet. Une première valeur d'intensité lumineuse est associée à la lumière de la première nappe de lumière diffusée par l'objet dont on veut mesurer la position. Une deuxième valeur d'intensité lumineuse est associée à la lumière de la deuxième nappe de lumière diffusée par l'objet dont on veut mesurer la position. En connaissant alors la façon dont les intensités lumineuses de la première et de la deuxième nappe de lumière varient selon la direction z normale aux plans de nappe, il est possible de déduire la position de l'objet le long de la direction z.

Il est important de noter que grâce à l'utilisation de deux nappes de lumière, le dispositif selon un aspect de l'invention permet de mesurer la position de l'objet diffusant la lumière dans l'espace, en déterminant ses trois cordonnées spatiales.

La position de l'objet diffusant la lumière dans un plan parallèle à l'une des nappes de lumière peut être mesurée à partir d'une image à la longueur d'onde ou à la polarisation de la première ou de la deuxième nappe de lumière. La position selon une troisième direction z normale au plan des nappes de lumière est mesurée en combinant les intensités lumineuses des deux images correspondant respectivement à la première et à la deuxième nappe de lumière.

En d'autres termes, l'objectif est de ne pas utiliser une seule nappe permettant de filmer les particules, mais d'en utiliser deux avec des polarisations ou des longueurs d'onde différentes, avec une superposition spatiale de la zone éclairée. L'utilisation d'un gradient d'intensité pour chaque nappe permet, lors de la capture d'image, de déduire la position des particules dans le plan, et de déduire leur position selon le troisième axe en observant une fonction du niveau lumineux de chaque longueur d'onde ou polarisation réfléchie. Ces nappes doivent être émises à une longueur d'onde différente l'une de l'autre ou à une polarisation différente l'une de l'autre.

Les deux sources de lumière sont synchronisées entre elles, ainsi qu'avec la caméra, permettant d'obtenir une image de l'écoulement au moment du déclenchement des deux impulsions lumineuses.

Chaque particule dans le domaine reflétera par conséquent deux longueurs d'ondes et/ou deux polarisations distinctes. Le ratio (ou fonction de celle-ci pour la calibration) de luminosité de chaque longueur d'onde ou polarisation permet simplement de remonter à l'information de la profondeur, impossible à obtenir avec les méthodes actuelles. La détermination de la position dans le plan x,y peut par exemple rester la même méthode que celle utilisée habituellement, par traitement d'image.

Selon un mode de réalisation, le module d'émission peut comprendre une première source laser possédant le premier spectre électromagnétique et une deuxième source laser possédant le deuxième spectre électromagnétique.

Selon un mode de réalisation du dispositif selon un aspect de l'invention, la première propriété électromagnétique est un premier spectre électromagnétique et la deuxième propriété électromagnétique est un deuxième spectre électromagnétique, le capteur de lumière étant sensible dans une région spectrale couvrant le premier spectre électromagnétique et dans une région spectrale couvrant le deuxième spectre électromagnétique.

Avantageusement, ce mode de réalisation permet de distinguer de façon simple la première image formée à partir de la lumière de la première nappe et la deuxième image formée à partir de la lumière de la deuxième nappe.

Selon un mode de réalisation du dispositif selon un aspect de l'invention, la première propriété électromagnétique est une première polarisation de la lumière et la deuxième propriété électromagnétique est une deuxième polarisation de la lumière, le capteur étant sensible à la lumière possédant la première polarisation et à la lumière possédant la deuxième polarisation.

Avantageusement, ce mode de réalisation permet d'obtenir les deux nappes de lumière à partir d'un même faisceau laser, ce qui simplifie le module d'émission de lumière.

Selon un mode de réalisation du dispositif selon un aspect de l'invention, l'intensité lumineuse de la première nappe et l'intensité lumineuse de la deuxième nappe sont respectivement décrites par des fonctions f1(z) et f2(z), z étant une direction sensiblement normale au plan de la première nappe de lumière et au plan de la deuxième nappe de lumière, les fonctions f1 et f2 étant des fonctions bijectives.

Avantageusement, l'utilisation de deux fonctions bijectives permet d'associer de façon univoque une position le long de la direction z à l'objet diffusant la lumière.

Selon un mode de réalisation du dispositif selon un aspect de l'invention, les fonctions f1 et f2 sont deux fonctions linéaires.

Selon un mode de réalisation du dispositif selon un aspect de l'invention, la fonction f1 est une fonction monotone croissante tandis que la fonction f2 est une fonction monotone décroissante.

Avantageusement, cela permet de simplifier la détermination de la position selon l'axe z.

Selon un mode de réalisation du dispositif selon l'invention, le premier spectre électromagnétique est centré autour d'une première longueur d'onde et le deuxième spectre électromagnétique est centré autour d'une deuxième longueur d'onde.

Avantageusement, cela permet de distinguer facilement les deux images associées respectivement à la première nappe de lumière et à la deuxième nappe de lumière.

Un autre aspect de l'invention porte sur un procédé de mesure de la position d'un objet dans un fluide en mouvement, ledit procédé de mesure de la position comprenant les étapes suivantes :
- Générer, à l'aide d'un module d'émission de lumière, une première nappe de lumière et une deuxième nappe de lumière, chaque nappe de lumière s'étendant dans un plan de nappe et possédant une intensité lumineuse variable selon une direction sensiblement normale au plan de nappe, le plan de nappe de la première nappe de lumière étant sensiblement parallèle au plan de nappe de la deuxième nappe de lumière, la première nappe de lumière possédant une première propriété électromagnétique et la deuxième nappe de lumière possédant une deuxième propriété électromagnétique ;
- Acquérir, à l'aide d'un capteur de lumière, une première image formée par la lumière de la première nappe de lumière diffusée par l'objet et une deuxième image formée par la lumière de la deuxième nappe de lumière diffusée par l'objet, ledit capteur de lumière étant connecté au module d'émission de lumière par un module de contrôle ;
- Déterminer la position de l'objet dans le plan de la première ou de la deuxième nappe de lumière à partir respectivement de la première ou de la deuxième image ;
- A partir d'une combinaison de la première et de la deuxième image, déterminer la position de l'objet le long d'un axe sensiblement perpendiculaire au plan de nappe de la première ou de la deuxième nappe de lumière.

Grâce au procédé selon un aspect de l'invention, il est possible de mesurer la position tridimensionnelle d'un objet dans un fluide en mouvement de façon simple, rapide et non intrusive. Le procédé de mesure de la position d'un objet dans un fluide un écoulement selon un aspect de l'invention peut être mis en oeuvre à l'aide du dispositif pour la mesure de la position d'un objet selon un autre aspect de l'invention.

De plus, le traitement d'images nécessaire pour mesurer la position le long d'une direction z normale aux plans de nappe comprend une simple combinaison de deux images, avec moins de calculs complexes.

Il est important de noter que, lors de l'étape de génération des nappes de lumière, les deux nappes de lumière sont générées sensiblement en même temps. En d'autres termes, les deux nappes de lumière éclairent le fluide en mouvement pendant une durée assez courte, de sorte que l'objet modifie peu sa position pendent l'éclairement.

De la même façon, l'acquisition de la première et de la deuxième image est déclenchée grâce à un module de contrôle permettant de synchroniser l'émission des deux nappes de lumière et l'acquisition des deux images.

Les deux images peuvent par exemple être acquises par un même capteur dont la surface sensible à la lumière a été partagée en deux parties, chacune sensible à la lumière d'une des deux nappes de lumière possédant deux propriétés électromagnétiques différentes.

Alternativement, le capteur de lumière peut comprendre un premier capteur de lumière sensible à la lumière de la première nappe de lumière et un deuxième capteur sensible à la lumière de la deuxième nappe de lumière.

En d'autres termes, le procédé selon un aspect de l'invention consiste à envoyer deux nappes lumineuses, mais cette fois-ci possédant des propriétés spatiales qui évoluent perpendiculairement au plan de nappe. Par exemple, en envoyant deux nappes possédant un gradient d'intensité, ce qui permet - par une analyse des couleurs réfléchies - de déterminer immédiatement la position en 3D de la particule détectée. L'intérêt de mélanger deux couleurs est de ne plus dépendre de la quantité de lumière réfléchie (et donc de la taille de la particule), mais est de déterminer sa position en fonction du ratio réfléchi des deux couleurs.

Selon un mode de réalisation du procédé de détermination de la position d'un objet selon un aspect de l'invention, la combinaison de la première et de la deuxième image comprend le rapport entre l'intensité d'une partie de la première image et l'intensité d'une partie de la deuxième image.

Avantageusement, ce traitement d'images permet de mesurer de façon simple et rapide la position de l'objet diffusant la lumière selon une direction z normale aux plans des nappes de lumière.

Selon un mode de réalisation du procédé de détermination de la position d'un objet selon un aspect de l'invention, le module de contrôle est configuré pour synchroniser l'étape de générer une première et une deuxième nappe de lumière avec l'étape d'acquérir une première et une deuxième image.

Selon un mode de réalisation du procédé de détermination de la position d'un objet selon un aspect de l'invention, la première propriété électromagnétique est un premier spectre électromagnétique et la deuxième propriété électromagnétique est un deuxième spectre électromagnétique, le capteur de lumière étant sensible dans une région spectrale couvrant le premier spectre électromagnétique et dans une région spectrale couvrant le deuxième spectre électromagnétique.

Avantageusement, ce mode de réalisation permet de distinguer de façon simple la première image formée à partir de la lumière de la première nappe et la deuxième image formée à partir de la lumière de la deuxième nappe.

Selon un mode de réalisation du procédé de détermination de la position d'un objet selon un aspect de l'invention, la première propriété électromagnétique est une première polarisation de la lumière et la deuxième propriété électromagnétique est une deuxième polarisation de la lumière, le capteur étant sensible à la lumière possédant la première polarisation et à la lumière possédant la deuxième polarisation.

Avantageusement, ce mode de réalisation permet d'obtenir deux nappes de lumière à partir d'une même source de lumière telle qu'un laser. Cela permet de simplifier le module d'émission de lumière.

Selon un mode de réalisation du procédé de détermination de la position d'un objet selon un aspect de l'invention l'intensité lumineuse de la première nappe et l'intensité lumineuse de la deuxième nappe sont respectivement décrites par des fonctions f1(z) et f2(z), z étant la direction sensiblement normale au plan de la première nappe de lumière et au plan de la deuxième nappe de lumière, les fonctions f1 et f2 étant des fonctions bijectives.

Avantageusement, l'utilisation de deux fonctions bijectives permet de déterminer de façon univoque la position selon l'axe z de l'objet diffusant la lumière.

Selon un mode de réalisation du procédé de détermination de la position d'un objet selon un aspect de l'invention, les fonctions f1 et f2 sont deux fonctions linéaires. Par exemple la fonction f1 est une fonction linéaire croissante tandis que la fonction f2 est une fonction linéaire décroissante.

Avantageusement, l'utilisation de deux fonctions linéaires permet de réduire davantage la complexité du traitement des données nécessaire pour extraire la position selon l'axe z normale aux plans des nappes de lumière.

Selon un mode de réalisation du procédé de détermination de la position d'un objet selon un aspect de l'invention, le premier spectre électromagnétique est centré autour d'une première longueur d'onde et le deuxième spectre électromagnétique est centré autour d'une deuxième longueur d'onde.

Avantageusement, cela permet de distinguer de façon simple et efficace la première et la deuxième image associées respectivement à la lumière diffusée de la première nappe de lumière et à la lumière diffusée de la deuxième nappe de lumière.

Un autre aspect de l'invention porte sur un procédé de mesure de la vitesse d'un objet dans un fluide en mouvement, ledit procédé comprenant les étapes suivantes :
- Mesurer une première position de l'objet dans le fluide en mouvement à l'aide du procédé de mesure de la position selon un aspect de l'invention, ladite première position correspondant à un temps t0 ;
- Mesurer une deuxième position de l'objet dans le fluide en mouvement à l'aide du procédé de mesure de la position selon un aspect de l'invention, ladite deuxième position correspondant à un temps t0 + Dt, Dt étant l'intervalle de temps entre la mesure de la première position et la mesure de la deuxième position ;
- Déterminer à partir de la première position, de la deuxième position et de l'intervalle de temps Dt la vitesse de l'objet dans le fluide en mouvement.

Selon un mode de réalisation du procédé de mesure de la vitesse d'un objet dans un fluide en mouvement, l'étape de calculer la vitesse de l'objet dans le fluide en mouvement comprend le calcul du vecteur déplacement de l'objet entre la première position et la deuxième position. Le calcul de la vitesse comprend alors le calcul d'un vecteur vitesse à partir des trois composantes du vecteur déplacement et de l'intervalle de temps Dt. Il est alors possible de déterminer les trois composantes du vecteur vitesse de l'objet.

### Figures

D'autres avantages et caractéristiques de l'invention apparaîtront à la lecture de la description qui suit, illustrée par les figures dans lesquelles :
- La [Figure 1] illustre une vue schématique d'un dispositif de mesure de la vitesse d'un objet dans un fluide en mouvement selon l'état de la technique ;
- La [Figure 2] illustre une carte bidimensionnelle des vecteurs déplacement de plusieurs objets dans un fluide en mouvement obtenue à l'aide d'un dispositif selon l'état de la technique ;
- La [Figure 3a] illustre un mode de réalisation d'un module d'émission d'un dispositif de mesure de la position d'un objet dans un fluide en mouvement selon un aspect de l'invention ;
- La [Figure 3b] illustre l'intensité lumineuse d'une nappe de lumière en fonction de la direction z normale au plan de la nappe de lumière ;
- La [Figure 4a] illustre un mode de réalisation d'un dispositif de mesure de la position d'un objet dans un fluide en mouvement selon un aspect de l'invention ;
- La [Figure 4b] illustre des intensités lumineuses des deux nappes de lumière de la figure 4a en fonction de la direction z normale au plan des nappes de lumière ;
- La [Figure 5] illustre une carte tridimensionnelle des vecteurs déplacement de plusieurs objets dans un fluide en mouvement obtenue à l'aide d'un dispositif selon un aspect de l'invention ;
- La [Figure 6] illustre une vue schématique d'un mode de réalisation d'un procédé de mesure de la position d'un objet dans un fluide en mouvement selon un aspect de l'invention.
- La [Figure 7] illustre une vue schématique d'un mode de réalisation d'un procédé de mesure de la vitesse d'un objet dans un fluide en mouvement selon un aspect de l'invention.
- Les [Figure 8a], [Figure 8b] et [Figure 8c] illustrent d'autres modes de réalisation de la variation d'intensité lumineuse des nappes de lumière selon une direction perpendiculaire au plan de nappe.

### Description détaillée de l'invention

Les Figures 1 et 2 ont été décrites en relation à l'état de la technique.

Des exemples de réalisation d'un dispositif de mesure de la position d'un objet dans un fluide en mouvement selon un aspect de l'invention sont décrits en détail ci-après, en référence aux dessins annexés. Ces exemples illustrent les caractéristiques et avantages de l'invention. Il est toutefois rappelé que l'invention ne se limite pas à ces exemples.

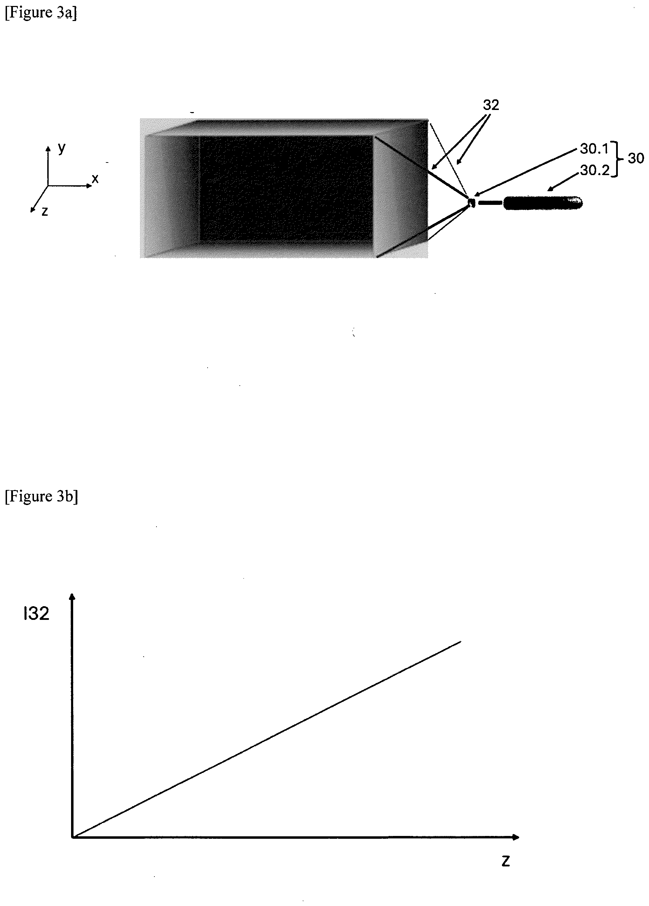

La figure 3a illustre un mode de réalisation d'un module d'émission de lumière 30 d'un dispositif pour la mesure de la position d'un objet dans un fluide en mouvement selon un aspect de l'invention.

Tels que représentés à la figure 3a, le module d'émission de lumière 30 comprennent une source de lumière 30.2 et des éléments optiques 30.1. La source de lumière 30.2 est configurée pour émettre des impulsions de lumière. Par exemple, la source de lumière 30.2 peut émettre des impulsions de lumière avec une fréquence comprise entre 1 kHz et 1MHz. Selon un mode de réalisation, la source de lumière 30.3 est une source de lumière laser.

Les éléments optiques 30.1 sont configurés pour modifier la forme du faisceau de lumière émis par la source de lumière 30.2 de sorte à obtenir une nappe de lumière 32. Telle qu'illustrée à la figure 3a, la nappe de lumière 32 s'étend dans un plan parallèle au plan x-y.

Avantageusement, l'intensité lumineuse de la nappe de lumière 32 dépend de la position le long de l'axe z. L'intensité lumineuse de la nappe 32 peut être décrite par une fonction bijective f1(z). Le fait que la fonction f1 soit bijective permet d'associer à chaque valeur d'intensité lumineuse de la première nappe de lumière 32 une seule valeur de la cordonnée spatiale z, z étant sensiblement normale au plan de la nappe de lumière 32.

La figure 3b illustre un graphe avec en ordonnée l'intensité lumineuse 132 de la première nappe de lumière 32 illustrée à la figure 3a et en abscisse la cordonnée spatiale z. Dans le cas de la figure 3b, l'intensité lumineuse de la première nappe de lumière 32 est une fonction linéaire de la cordonnée spatiale z.

Les figures 3a et 3b illustrent donc un exemple de nappe de lumière s'étendant dans un plan et possédant une intensité lumineuse variable selon un axe z sensiblement normal au plan de la nappe de lumière.

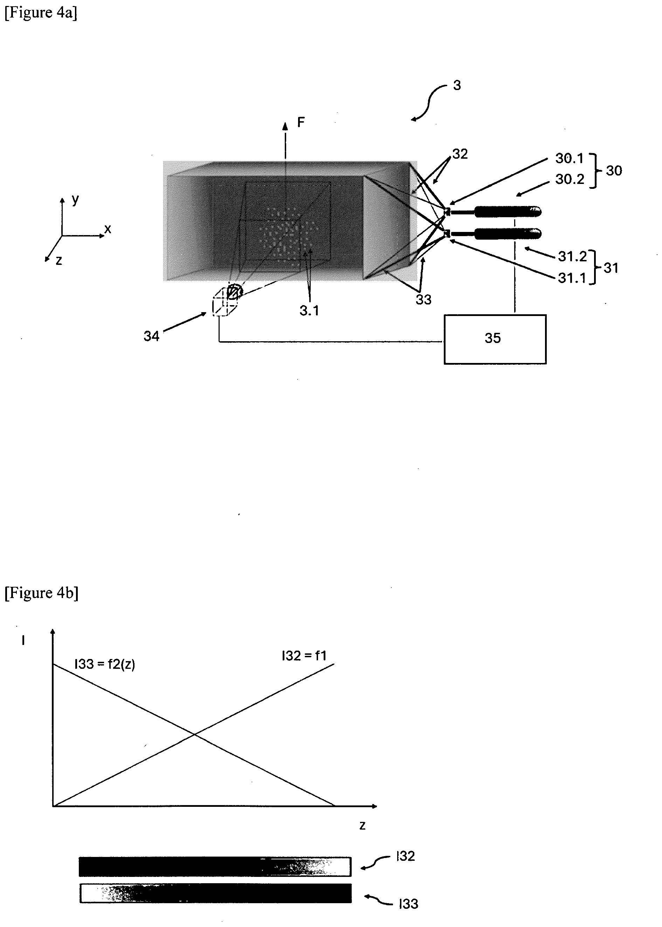

La figure 4a illustre un mode de réalisation d'un dispositif 3 pour la mesure de la position d'un objet 3.1 dans un fluide en mouvement selon un aspect de l'invention. Le mouvement du fluide est représenté par la flèche F.

Tel qu'illustré à la figure 4a, le dispositif 3 comprend un module d'émission de lumière comprenant des premiers moyens 30 et des deuxièmes moyens 31. Les premiers moyens d'émission de lumière 30 comprennent une première source de lumière 30.2 et un premier système optique 30.1. Les deuxièmes moyens d'émission de lumière 31 comprennent une deuxième source de lumière 31.2 et un deuxième système optique 31.1. Les premiers moyens d'émission 30 et les deuxièmes moyens d'émission 31 sont configurés pour émettre ou générer respectivement une première 32 et une deuxième 33 nappes de lumière. La première nappe de lumière 32 et la deuxième nappe de lumière 33 possèdent deux spectres électromagnétiques différents. Selon un mode de réalisation, la première nappe de lumière 32 possède un premier spectre électromagnétique et la deuxième nappe de lumière 33 possède un deuxième spectre électromagnétique.

Selon un mode de réalisation, le premier spectre électromagnétique est centré autour d'une première longueur d'onde et le deuxième spectre électromagnétique est centré autour d'une deuxième longueur d'onde.

Selon un mode de réalisation, le premier et le deuxième spectre électromagnétique sont décrits par des fonctions en cloche, par exemple des fonctions gaussiennes.

Selon le mode de réalisation illustré à la figure 4a, le dispositif 3 comprend en outre un capteur de lumière 34. Le capteur de lumière 34 est configuré pour capter la lumière diffusée par les objets 3.1 dans le fluide en mouvement. De plus, le capteur de lumière 34 est sensible à la fois dans la région spectrale correspondant au premier spectre électromagnétique et dans la région spectrale correspondant au deuxième spectre électromagnétique.

Le capteur de lumière 34 est donc configuré pour acquérir une première image et une deuxième image. La première image correspond à la lumière de la première nappe de lumière 32 diffusée par les objets 3.1. La deuxième image correspond à la lumière de la deuxième nappe de lumière 33 diffusée par les objets 3.1.

Chaque nappe de lumière s'étend dans un plan de nappe parallèle au plan x-y représenté à la figure 4a. La première nappe de lumière 32 et la deuxième nappe de lumière 33 possèdent chacune une intensité variable le long de l'axe z, z étant une direction sensiblement normale aux plans de nappe.

Tel qu'illustré à la figure 4a, le dispositif 3 comprend en outre un module de contrôle 35 connecté au module d'émission de lumière et au capteur de lumière. Le module de contrôle 35 comprend des moyens de synchronisation configurés pour synchroniser le module d'émission de lumière 30, 31 et le capteur de lumière 34. Les moyens de synchronisation 35 permettent donc de synchroniser l'acquisition des images et l'émission des nappes de lumière pour éclairer le fluide en mouvement, de sorte à obtenir deux images des objets 3.1 à deux longueurs d'ondes différentes.

Les intensité lumineuse I32 et I33 de la première et de la deuxième nappe de lumière sont décrites respectivement par les fonctions f1(z) et f2(z). Ces deux fonctions étant bijectives, il est possible de combiner la première et la deuxième image pour extraire la position des objets 3.1 le long de l'axe z.

Le graphe illustré à la figure 4b illustre un mode de réalisation des fonctions f1(z) et f2(z). Selon ce mode de réalisation la fonction f1 et la fonction f2 sont deux fonctions linéaires, respectivement croissante et décroissante le long de l'axe z. Avantageusement, dans le cas illustré à la figure 4b, il est possible d'utiliser le rapport entre l'intensité d'un objet 3.1 sur la première image et l'intensité du même objet sur la deuxième image afin de trouver la position dudit objet le long de l'axe z. En d'autres termes, l'utilisation de fonctions linéaires permet de simplifier le traitement de la première et de la deuxième image pour trouver la position des objets le long de l'axe z.

La variation d'intensité lumineuse selon l'axe z peut également être représentée par les barres en niveaux de gris en bas de la figure 4b, où l'on voit qu'un gris plus foncé correspond à une intensité lumineuse faible tandis qu'un gris plus clair correspond à une intensité lumineuse plus forte. Les deux barres correspondent aux deux couleurs différentes des nappes de lumière.

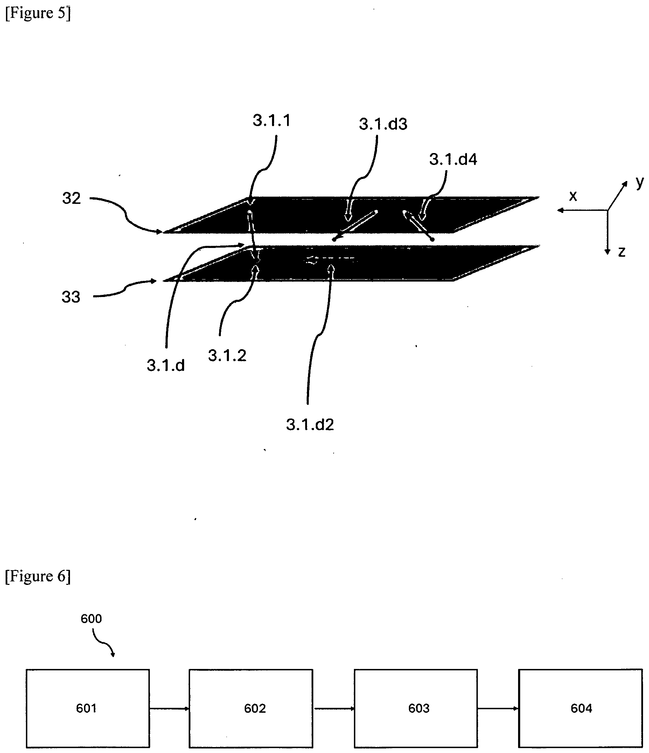

La figure 5 illustre les vecteurs déplacement de 4 objets dans un fluide en écoulement, obtenus à l'aide du dispositif 3 selon un aspect de l'invention. Les deux nappes de lumière 32 et 33 sont représentées comme deux plans mais elles possèdent une intensité variable selon l'axe z, comme il a été décrit en relation aux figures précédentes.

Le point 3.1.1 indique la position d'un des objets à l'instant t0. Cette position est déterminée grâce à l'utilisation d'une première et d'une deuxième image, obtenues respectivement à partir de la lumière de la première nappe 32 et de la deuxième nappe 33. Le point 3.1.2 indique la position du même objet à un instant de temps successif, t0 +Dt. De la même façon, la position 3.1.3 est déterminée grâce à une première et une deuxième image obtenues à partir de la lumière de la première et de la deuxième nappe de lumière. Il est alors possible de déterminer le vecteur déplacement 3.1.d de l'objet entre l'instant t0 et l'instant t0 +Dt.

La connaissance du vecteur déplacement 3.1.d et de l'intervalle de temps Dt entre les deux positions 3.1.1 et 3.1.2 permet en outre de déterminer les trois composantes du vecteur vitesse de l'objet dans le fluide en mouvement.

De la même façon, il est possible de déterminer les vecteurs déplacement 3.1.d2, 3.1.d3 et 3.1.d4 des autres objets illustrés à la figure 5.

La figure 6 illustre schématiquement les étapes d'un procédé 600 de mesure de la position d'un objet dans un fluide en mouvement. Le procédé 600 peut par exemple être mis en oeuvre à l'aide d'un dispositif 3 de mesure de la position d'un objet dans un fluide en mouvement selon un aspect de l'invention.

Tel qu'illustré à la figure 6, le procédé 600 comprend une étape 601 de générer une première nappe de lumière et une deuxième nappe de lumière. Chaque nappe de lumière s'étend selon un plan de nappe. Le premier plan de nappe et le deuxième plan de nappe peuvent être parallèles. Chaque nappe de lumière possède son propre spectre électromagnétique. Par exemple le premier spectre électromagnétique et le deuxième spectre électromagnétique sont représentés par une fonction en cloche, centrée respectivement autour d'une première et d'une deuxième longueur d'onde. L'intensité lumineuse de chaque nappe de lumière est variable le long d'une direction z normale au plan de la nappe, ce qui permet d'obtenir la position d'un objet le long de l'axe z.

Tel qu'illustré à la figure 6, le procédé 600 comprend en outre une étape 602 d'acquisition d'une première et d'une deuxième image. La première image est formée par la lumière diffusée par l'objet dont on veut mesurer la position et provenant de la première nappe de lumière. La deuxième image est formée par la lumière diffusée par l'objet dont on veut mesurer la position et provenant de la deuxième nappe de lumière.

L'étape 602 d'acquisition des images et l'étape 601 d'éclairage du fluide en mouvement à l'aide d'un module d'éclairage sont synchronisée. Cela permet d'obtenir deux images du fluide en mouvement comprenant les objets dont on veut mesurer la position lorsque le fluide est éclairé par les nappes de lumière.

Le procédé 600 comprend en outre, selon le mode de réalisation illustré à la figure 6, une étape 603 de détermination de la position de l'objet dans le plan de la première ou de la deuxième nappe de lumière, à partir respectivement de la première ou de la deuxième image. Cette étape permet de déterminer les cordonnées spatiales de l'objet dans le plan d'une des nappes de lumière.

Lors de l'étape 604, la position de l'objet le long d'une direction sensiblement perpendiculaire au plan de nappe de la première ou de la deuxième nappe de lumière est obtenue en combinant la première et la deuxième image obtenues à l'étape 602.

Par exemple la combinaison des deux images réalisées lors de l'étape 603 comprend le rapport entre l'intensité d'une partie de la première image et une partie de la deuxième image. Cela est particulièrement avantageux quand la variation spatiale des intensités lumineuses de la première et de la deuxième nappe le long de l'axe z est décrite par des lignes droites, tel qu'illustré à la figure 4b.

Plus en générale, les intensités lumineuses de la première et de la deuxième nappe de lumière sont respectivement décrites par des fonctions f1(z) et f(z), z étant la direction sensiblement normale au plan d'une des deux nappes de lumière. Les deux fonctions f1(z) et f(z) sont bijectives, ce qui permet d'associer à l'intensité lumineuse une position le long de l'axe z.

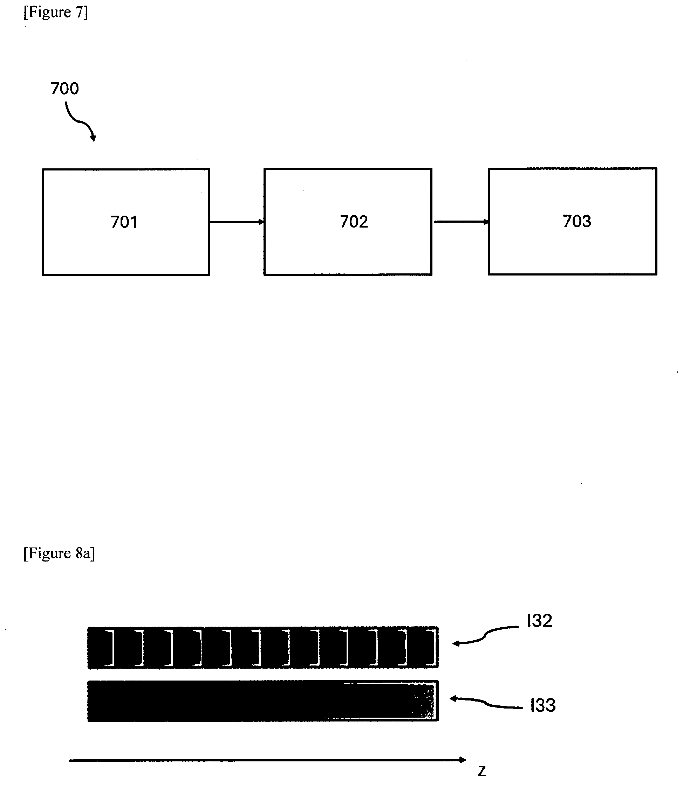

La figure 7 illustre schématiquement un mode de réalisation d'un procédé 700 de mesure de la vitesse d'un objet dans un fluide en mouvement.

Tel qu'illustré à la figure 7, le procédé 700 comprend une étape de mesurer une première position 701 de l'objet dans le fluide en mouvement à l'aide d'un procédé 600 de mesure de la position selon un aspect de l'invention. La première position est la position de l'objet à un instant de temps t0.

Le procédé 700 comprend en outre une étape de mesure d'une deuxième position 702 de l'objet dans le fluide en mouvement. La deuxième position est la position de l'objet à un instant de temps t0 + Dt. La deuxième position est elle aussi mesurée à l'aide du procédé 600 selon un aspect de l'invention.

Il est alors possible, lors d'une étape 703, de déterminer la vitesse de l'objet dans le fluide en mouvement en partant de la première position, de la deuxième position et de l'intervalle de temps Dt.

Selon un mode de réalisation, l'étape 703 comprend le calcul du vecteur déplacement de l'objet dont on veut déterminer la vitesse. Le calcul du vecteur déplacement comprend la différence entre les cordonnées spatiales à l'instant t0 + Dt et l'instant t0. Des exemples de vecteurs déplacement ont été illustrés à la figure 5.

La figure 8a illustre un autre mode de réalisation de la variation spatiale de l'intensité lumineuse I32 de la première nappe de lumière et de la deuxième nappe de lumière 133 selon l'axe z normale au plan de nappes. Dans le cas illustré à la figure 8a, l'intensité lumineuse de la deuxième nappe I33 varie linéairement le long de z tandis que l'intensité lumineuse de la première nappe 132 varie en dent de scie le long de l'axe z. Avantageusement, la variation en dent de scie permet de déterminer plus précisément la position de l'objet le long de l'axe z.

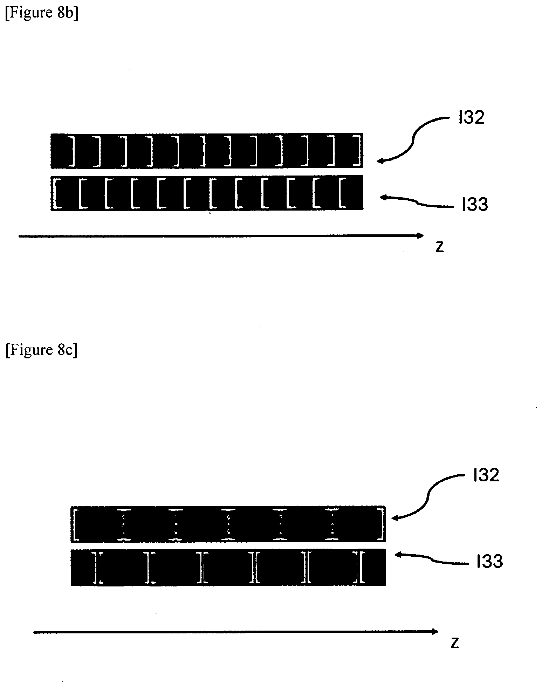

La figure 8b illustre un autre mode de réalisation de la variation spatiale de l'intensité lumineuse 132 de la première nappe de lumière et de la deuxième nappe de lumière I33. Dans le cas illustré à la figure 8b, les deux intensité lumineuses I32 et I33 possèdent un profil en dent de scie le long de l'axe z, avec l'intensité I32 de la deuxième nappe de lumière étant tourné de 180 degrés par rapport à l'intensité de la première nappe de lumière I32.

L'agencement des intensités lumineuses de la première et de la deuxième nappe de lumière illustré à la figure 8b permet d'augmenter la précision dans la détermination de la position des objets dans le fluide en écoulement lors de la mise en oeuvre du procédé 600 selon un aspect de l'invention.

La figure 8c montre un quatrième mode de réalisation de la variation spatiale de l'intensité lumineuse de la première nappe I32 et de la deuxième nappe I33. Dans le cas illustré à la figure 8c, l'intensité lumineuse de la deuxième nappe est anti corrélée avec l'intensité lumineuse de la première nappe de lumière.

## Revendications

1. Dispositif (3) pour la mesure de la position d'un objet (3.1) dans un fluide en mouvement, ledit dispositif comprenant :
- un module (30, 31) d'émission de lumière ;
- une première nappe de lumière (32) et une deuxième nappe de lumière (33), lesdites première et deuxième nappe de lumière (32, 33) étant émises par le module d'émission de lumière (30, 31), chaque nappe de lumière s'étendant dans un plan de nappe et possédant une intensité lumineuse variable le long d'une direction sensiblement normale au plan de nappe, le plan de nappe de la première nappe de lumière (32) étant sensiblement parallèle au plan de nappe de la deuxième nappe de lumière (33), la première nappe de lumière possédant une première propriété électromagnétique et la deuxième nappe de lumière possédant une deuxième propriété électromagnétique-;
- Un capteur de lumière (34) diffusée par l'objet (3.1) ;
- Un module de contrôle (35) connecté au module d'émission de lumière (30, 31) et au capteur de lumière (34).

2. Dispositif (3) selon la revendication précédente dans lequel le module de contrôle (35) comprend des moyens de synchronisation configurés pour synchroniser le module d'émission de lumière (30, 31) avec le capteur de lumière (34).

3. Dispositif (3) selon l'une des revendications précédentes dans lequel la première propriété électromagnétique est un premier spectre électromagnétique et la deuxième propriété électromagnétique est un deuxième spectre électromagnétique, le capteur de lumière (34) étant sensible dans une région spectrale couvrant le premier spectre électromagnétique et dans une région spectrale couvrant le deuxième spectre électromagnétique.

4. Dispositif (3) selon la revendication précédente dans lequel le module d'émission de lumière (30, 31) comprend une première source laser (30.2) possédant le premier spectre électromagnétique et une deuxième source laser (31.2) possédant le deuxième spectre électromagnétique.

5. Dispositif (3) selon la revendication 1 ou la revendication 2 dans lequel la première propriété électromagnétique est une première polarisation de la lumière et la deuxième propriété électromagnétique est une deuxième polarisation de la lumière, le capteur (34) étant sensible à la lumière possédant la première polarisation et à la lumière possédant la deuxième polarisation.

6. Dispositif (3) selon l'une des revendications précédentes dans lequel l'intensité lumineuse de la première nappe de lumière (I32) et l'intensité lumineuse de la deuxième nappe de lumière (I33) sont respectivement décrites par des fonctions f1(z) et f2(z), z étant une direction sensiblement normale au plan de la première nappe de lumière et au plan de la deuxième nappe de lumière, les fonctions f1 et f2 étant des fonctions bijectives.

7. Dispositif selon la revendication précédente dans lequel les fonctions f1 et f2 sont des fonctions linéaires.

8. Procédé (600) de mesure de la position d'un objet dans un fluide en mouvement, ledit procédé de mesure de la position comprenant les étapes suivantes :
- Générer (601), à l'aide d'un module d'émission de lumière, une première nappe de lumière et une deuxième nappe de lumière, chaque nappe de lumière s'étendant dans un plan de nappe et possédant une intensité lumineuse variable selon une direction sensiblement normale au plan de nappe, le plan de nappe de la première nappe de lumière étant sensiblement parallèle au plan de nappe de la deuxième nappe de lumière, la première nappe de lumière possédant une première propriété électromagnétique et la deuxième nappe de lumière possédant une deuxième propriété électromagnétique ;
- Acquérir (602), à l'aide d'un capteur de lumière, une première image formée par la lumière de la première nappe de lumière diffusée par l'objet et une deuxième image formée par la lumière de la deuxième nappe de lumière diffusée par l'objet, ledit capteur de lumière étant connecté au module d'émission de lumière par un module de contrôle ;
- Déterminer la position de l'objet dans le plan de la première ou de la deuxième nappe de lumière (603) à partir respectivement de la première ou de la deuxième image ;
- A partir d'une combinaison de la première et de la deuxième image, déterminer (604) la position de l'objet le long d'un axe sensiblement perpendiculaire au plan de nappe de la première ou de la deuxième nappe de lumière.

9. Procédé (600) selon la revendication précédente dans lequel le module de contrôle est configuré pour synchroniser l'étape de générer (601) une première et une deuxième nappe de lumière avec l'étape d'acquérir (602) une première et une deuxième image.

10. Procédé (600) selon la revendication 8 ou 9 dans lequel la première propriété électromagnétique est un premier spectre électromagnétique et la deuxième propriété électromagnétique est un deuxième spectre électromagnétique, le capteur de lumière (34) étant sensible dans une région spectrale couvrant le premier spectre électromagnétique et dans une région spectrale couvrant le deuxième spectre électromagnétique.

11. Procédé (600) selon la revendication 8 ou 9 dans lequel la première propriété électromagnétique est une première polarisation de la lumière et la deuxième propriété électromagnétique est une deuxième polarisation de la lumière, le capteur (34) étant sensible à la lumière possédant la première polarisation et à la lumière possédant la deuxième polarisation.

12. Procédé (600) selon l'une des revendication 8 à 11 dans lequel l'intensité lumineuse de la première nappe et l'intensité lumineuse de la deuxième nappe sont respectivement décrites par des fonctions f1(z) et f2(z), z étant la direction sensiblement normale au plan de la première nappe de lumière et au plan de la deuxième nappe de lumière, les fonctions f1 et f2 étant des fonctions bijectives.

13. Procédé (600) selon la revendication 12 dans lequel les fonctions f1 et f2 sont deux fonctions linéaires.

14. Procédé de mesure de la vitesse (700) d'un objet dans un fluide en mouvement, ledit procédé comprenant les étapes suivantes :
- Mesurer une première position (701) de l'objet dans le fluide en mouvement à l'aide du procédé selon l'une des revendications 8 à 13, ladite première position correspondant à un temps t0 ;
- Mesurer une deuxième position (702) de l'objet dans le fluide en mouvement à l'aide du procédé selon l'une des revendications 8 à 13, ladite deuxième position correspondant à un temps t0 + Dt, Dt étant l'intervalle de temps entre la mesure de la première position et la mesure de la deuxième position ;
- Déterminer (703) à partir de la première position, de la deuxième position et de l'intervalle de temps Dt la vitesse de l'objet dans le fluide en mouvement.

15. Procédé de mesure de la vitesse (700) d'un objet dans un fluide en mouvement selon la revendication précédente dans lequel l'étape de déterminer (703) la vitesse de l'objet dans le fluide en mouvement comprend la détermination du vecteur déplacement de l'objet dans le fluide en mouvement.
